# EUROPEAN PATENT SPECIFICATION

(11) **EP 4 026 812 B1**
(45) Date of publication and mention of the grant of the patent: **19.02.2025**
(21) Application number: 21200924.5
(22) Date of filing: 12.01.2021
(51) Int. Cl.: C03B 27/04

(54) **ENERGY-SAVING WINDBOX AND COOLING DEVICE**
ENERGIESPARENDER WINDKASTEN UND KÜHLVORRICHTUNG
CAISSON D'ADMISSION D'AIR ET DISPOSITIF DE REFROIDISSEMENT ÉCONOME EN ÉNERGIE

(43) Date of publication of application: 13.07.2022
(62) Divisional of application: 21151192.8
(73) Proprietor: Tung Chang Machinery and Engineering Co., Ltd., Taoyuan City (TW)
(72) Inventor: Tu, Li-Jen, Taoyuan City (TW)
(74) Representative: Lang, Christian

(56) References cited:
- JP-A- S61 270 230
- US-A1- 2020 131 070
- US-A1- 2020 369 550

## Description

### BACKGROUND

### TECHNICAL FIELD

The present disclosure relates to a glass cooling processing technology, in particular to an energy-saving wind box and a cooling device that can adjust the wind output region according to a size and a position of the glass and correspondingly regulate an output wind power which corresponds to a rotating speed of a motor.

### RELATED ART

Glass has excellent penetration rate and scratch resistance, so it is widely used in daily life. At present, related glass products can be seen not only in buildings and general daily necessities, but also in electronic appliances and vehicles. It can be seen that the peripheral products of glass have flooded people's lives.

Glass is mostly made through batching, melting, forming, annealing and other processes. After the glass is made, further processing can be performed to improve the functionality of the glass. For example, the annealed glass can be cut to the required size, then the glass is heated by a glass heating furnace to soften the glass, and then the glass is rapidly cooled down by a cooling device, so the temperature of the glass surface is decreased below the annealing temperature for rapid hardening and shrinking. When the inside of the glass shrinks, it will cause a compressive stress on the surface, and the inside of the glass will have a tensile stress, which can increase the strength of the glass to form a so-called strengthened glass.

Generally speaking, the aforementioned cooling device at least includes components, such as, a motor, a wind box, and a plurality of wind outlet structures. The wind box includes air outlets arranged horizontally in an upper row and a lower row on the surface of the wind box, and each of the wind outlet structures is connected to the corresponding air outlets. Between the wind outlet structures arranged in the upper and lower rows, rollers are installed and used to carry the glass. When the motor of the cooling device operates, wind can be generated. The wind can then be passed through the wind outlet structure and blown to the glass on the rollers, so that the glass can be cooled down.

The size of the glass to be performed for the cooling process is different each time, but the conventional cooling device can only output the wind in the whole wind output region every time when it is started. The conventional cooling device and cannot adjust the wind output region according to the glass size and cannot correspondingly adjust the rotating speed of the motor. Therefore, it will result in waste of energy and unnecessary costs.

Regarding conventional techniques of glass tempering and cooling processing, different devices and systems are known. For example, document JP S61 270230 A discloses a conventional device for tempering a glass plate, document US 2020/0369550 A1 discloses a conventional plate glass tempering cooling system and from document US 2020/0131070 A1 a conventional method for tempering glass sheets is known.

### SUMMARY

In view of the above-mentioned problems of the prior art, the purpose of the present disclosure is to provide an energy-saving wind box and a cooling device that can adjust the wind area according to the size and the position of the glass, and further can correspondingly regulate the output wind power which corresponds to the rotating speed of the motor.

According to one objective of the present disclosure, the present disclosure provides an energy-saving wind box for cooling a glass sheet according to claim 1, comprising: a wind box body, wherein an outer surface of the wind box body has a plurality of air outlets, the air outlets are horizontally arranged in an upper row and a lower row, the air outlets in an upper row are arranged respectively opposite to the air outlets in the lower row, and each of the air outlets has a wind hole; a plurality of slot plates, wherein the slot plates are respectively disposed in the wind holes; and a plurality of driving components, wherein each of the driving components is connected to the corresponding slot plate in the upper row and the corresponding slot plate in the lower row which is arranged opposite to the corresponding slot plate in the upper row, the corresponding two slot plates are controlled by the driving component to pivot to close or open the two corresponding wind holes.

According to the above technical features, the driving component comprises: a base, wherein the base is connected to the outer surface of the wind box body; a cylinder, wherein one end of the cylinder is connected to the base; an adapter, wherein one end of the adapter is connected to another one end of the cylinder, and the other one end of the cylinder is opposite to the end of the cylinder which is connected to the base; a pivot, wherein one end of the pivot is connected to the another one end of the adapter, and the other one end of the adapter is opposite to the end of the adapter which is connected to the cylinder; and a connecting rod, wherein the connecting rod is connected to another one end of the pivot, the other one end of the pivot is opposite to the end of pivot which is connected to the adapter, and two opposite ends of the connecting rod are connected to the corresponding slot plate in the upper row and the corresponding slot plate in the lower row which is arranged opposite to the corresponding slot plate in the upper row.

According to the above technical features, an inner surface of the wind box body has a plurality of through holes arranged horizontally in the lower row and the upper row, the through holes arranged in the lower row are arranged respectively opposite to the through holes arranged in the upper row, and the through holes are respectively connected to the wind holes; wherein energy-saving wind box further comprises: a lifting structure, wherein the lifting structure is disposed on the inner surface of the wind box body; and a shield plate, wherein the shield plate is connected to the lifting structure, the shield plate is controlled by the lifting structure to rise or descend, so as to close the through holes in the upper row or the through holes in the lower row.

According to the above technical features, the lifting structure comprises: two bracket components, wherein the two bracket components are respectively arranged on an upper part and a lower part of the inner surface of the wind box body; and at least one transmission component, wherein the transmission component comprises two transmission gears and a transmission chain, the two transmission gears are respectively disposed on the two bracket components, and the transmission chain surrounds the two transmission gears and is connected to the shield plate.

According to the above technical features, the energy-saving wind box further comprises: a guide frame, wherein the guide frame is disposed on the inner surface of the wind box body and connected to the shield plate, and the shield plate is controlled by the lifting structure to slide on the guide frame.

According to another objective of the present disclosure, the present disclosure provides a cooling device for cooling a glass sheet according to claim 6, comprising: a motor; an air blower, wherein the air blower is connected to the motor; a first wind supply pipe, wherein one end of the first wind supply pipe is connected to the air blower; the above energy-saving wind box, wherein a wind inlet of the energy-saving wind box is connected to another one end of the first wind supply pipe, and the other one end of the first wind supply pipe is opposite to the end of the first wind supply pipe which is connected to the air blower; a plurality of second wind supply pipes, wherein one end of each of the second wind supply pipes is connected to the corresponding air outlet of the energy-saving wind box; and a plurality of wind outlet structures, wherein each of the wind outlet structures is connected to another one end of the corresponding second wind supply pipe, the other one end of the corresponding second wind supply pipe is opposite to the end of the corresponding second wind supply pipe which is connected to the energy-saving wind box; wherein the motor adjusts a rotating speed according to a number of the opened wind holes of the energy-saving wind box, so as to control the air blower to generate a corresponding wind power, and then the wind power is output by the wind outlet structure.

Based on the above, the present disclosure is mainly based on the arrangement of the slot plates in the wind holes of the outer surface of the wind box body, each slot plate is connected to the corresponding driving component, and the slot plate can be pivoted through the control of the driving component to close or open the corresponding wind hole. Furthermore, the present disclosure can also set a shield plate on the inner surface of the wind box body. The shield plate can be longitudinally displaced under the control of the lifting structure to selectively shield the through holes which are located on the inner surface and communicated with the wind holes. Therefore, the cooling device of the present disclosure can adjust the wind output region according to the size and the position of the glass and can further adjust the rotating speed of the motor according to the number of opened wind holes of the wind box body, so as to achieve energy saving and cost reduction.

### DESCRIPTIONS OF DRAWINGS

FIG. 1 is a first schematic diagram of an energy-saving wind box according to a first embodiment of the present disclosure.
FIG. 2 is a second schematic diagram of an energy-saving wind box according to a first embodiment of the present disclosure.
FIG. 3 is a third schematic diagram of an energy-saving wind box according to a first embodiment of the present disclosure.
FIG. 4 is a fourth schematic diagram of an energy-saving wind box according to a first embodiment of the present disclosure.
FIG. 5 is a fifth schematic diagram of an energy-saving wind box according to a first embodiment of the present disclosure.
FIG. 6 is a sixth schematic diagram of an energy-saving wind box according to a first embodiment of the present disclosure.
FIG. 7 is a first schematic diagram of an energy-saving wind box according to a second embodiment of the present disclosure.
FIG. 8 is a second schematic diagram of an energy-saving wind box according to a second embodiment of the present disclosure.
FIG. 9 is a third schematic diagram of an energy-saving wind box according to a second embodiment of the present disclosure.
FIG. 10 is a schematic diagram of a cooling device of the present disclosure.

### DETAILED DESCRIPTION OF PREFERRED EMBODIMENTS

Embodiments of the present disclosure will now be described, by way of example only, with reference to the accompanying drawings. The following drawings are dedicated for description, and they are schematic and exemplary, being not drawn and precisely allocated in accordance with the actual ratio, thus not limiting the present disclosure.

The energy-saving wind box and cooling device of the present disclosure **is** applied to glass cooling processing technology. When the glass is heated and softened by a heating furnace, the present disclosure can be used to rapidly cool down the glass and make the glass rapidly harden and shrunken, thereby increasing the strength of the glass. Further, the present disclosure can control the wind output range and region according to the size and the position of the glass, avoiding the output of wind to the region where the glass does not exist, so as to save energy and cost.

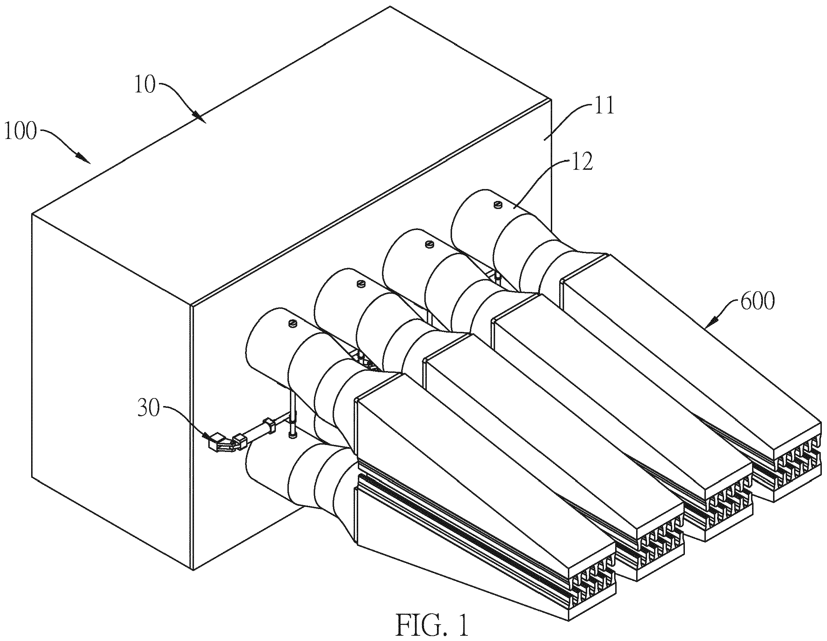

Refer to FIG. 1 through FIG. 3, and FIG. 1 through FIG. 3 are respectively a first through third schematic diagrams of an energy-saving wind box according to a first embodiment of the present disclosure. As shown in the drawings, the energy-saving wind box 100 mainly comprises a wind box body 10, slot plates 20 and driving components 30. An outer surface 11 of the wind box body 10 has a plurality of air outlets 12. The air outlets 12 are horizontally arranged in an upper row and a lower row on the outer surface 11, the air outlets 12 in an upper row are arranged respectively opposite to the air outlets 12 in the lower row, and each of the air outlets 12 has a wind hole 121. The air outlet 12 is connected to a corresponding one of wind outlet structures 600 directly or indirectly. The wind power flow to the wind outlet structure 600 via the corresponding wind hole 121 of the corresponding air outlet 12. Then through the wind outlet structure 600, the wind power is output to cool down the glass. The main technical feature of the present disclosure is that the slot plates 20 are provided in the wind holes 121 of the air outlets 12, respectively. Each of the driving components 30 is connected to the corresponding slot plate 20 in the upper row and the corresponding slot plate 20 in the lower row which is arranged opposite to the corresponding slot plate 20 in the upper row. The corresponding two slot plates 20 are controlled by the driving component 30 to pivot to close or open the two corresponding wind holes 121. In this way, the corresponding wind hole 121 can be opened according to the size and the position of the glass to be cooled down, so that the wind output region can be controlled.

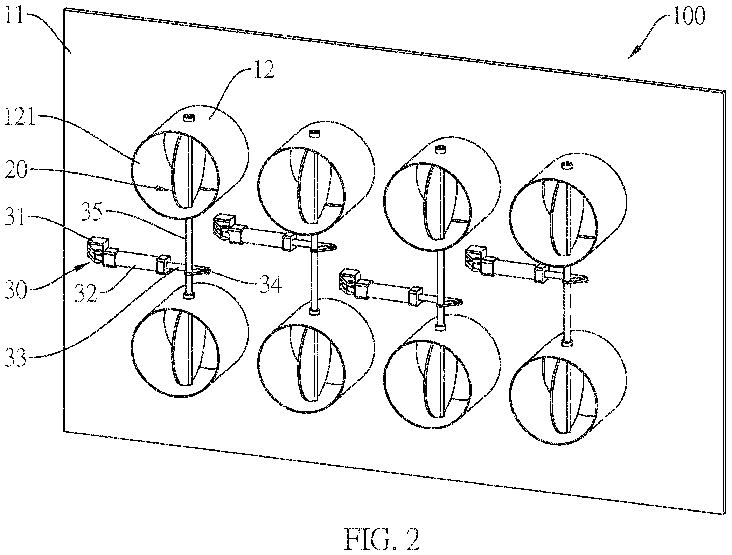

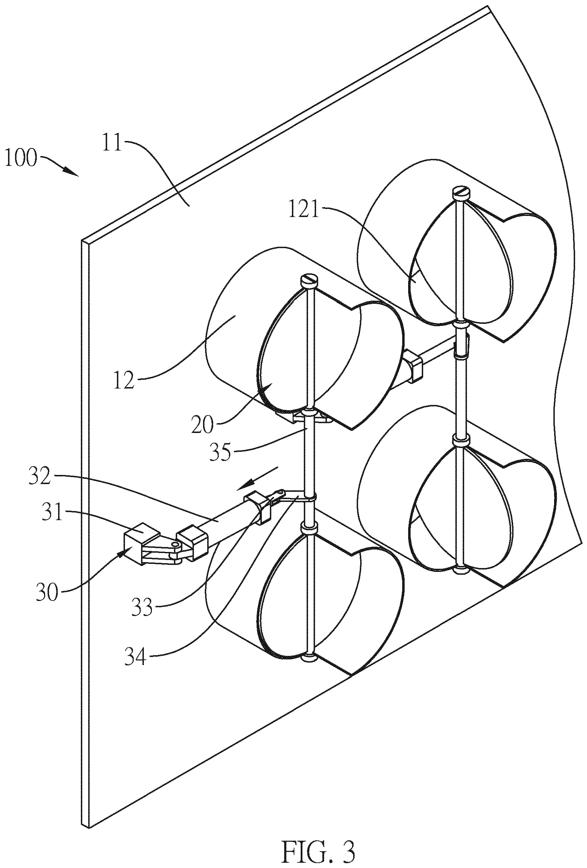

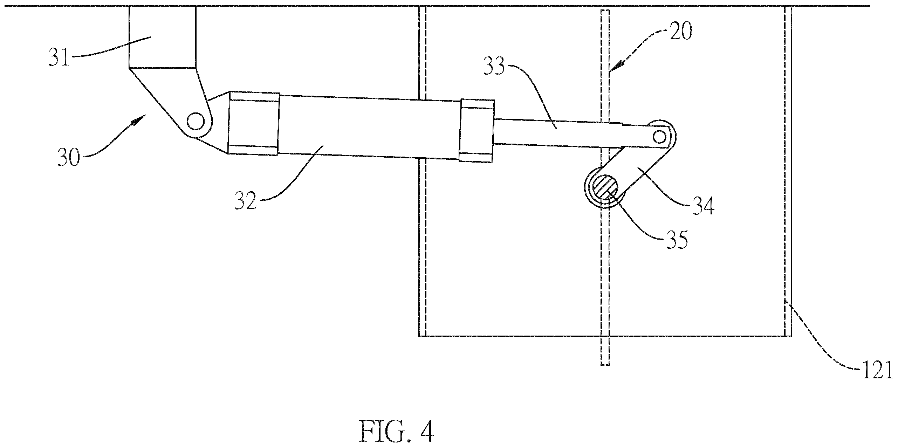

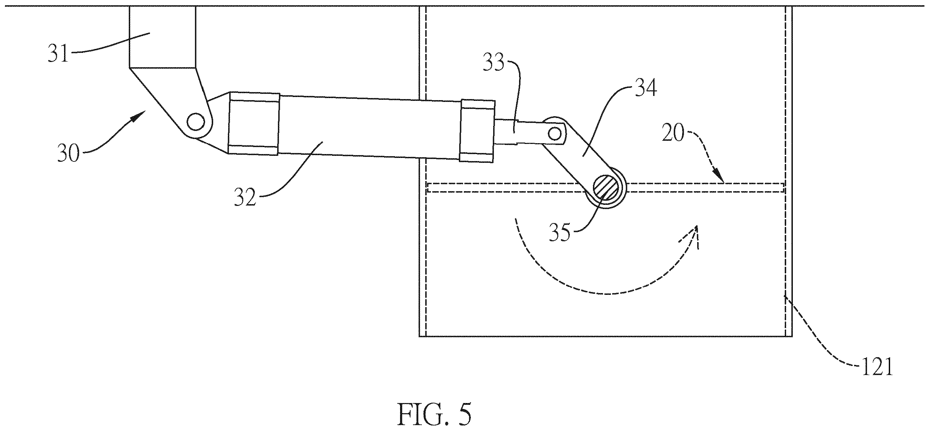

Refer to FIG. 4 and FIG. 5, and FIG. 4 and FIG. 5 are respectively a fourth and fifth schematic diagrams of an energy-saving wind box according to a first embodiment of the present disclosure. Specifically, the driving component 30 comprises a base 31, a cylinder 32, an adapter 33, a pivot 34 and a connecting rod 35. The base 31 is connected to the outer surface 11 of the wind box body 10. One end of the cylinder 32 is connected to the base 31. One end of the adapter 33 is connected to another one end of the cylinder 32, and the other one end of the cylinder 32 is opposite to the end of the cylinder 32 which is connected to the base 31. One end of the pivot 34 is connected to the other one end of the adapter 33, wherein said other one end of the adapter 33 is opposite to the end of the adapter 33 which is connected to the cylinder 32. The connecting rod 35 is connected to another one end of the pivot 34, the other one end of the pivot 34 is opposite to the end of pivot 34 which is connected to the adapter 33, and two opposite ends of the connecting rod 35 are connected to the corresponding slot plate 20 in the upper row and the corresponding slot plate 20 in the lower row which is arranged opposite to the corresponding slot plate 20 in the upper row. When the cylinder 32 activates, the pivot 34 pivots to drive the connecting rod 35, and the corresponding slot plate 20 in the upper row and the corresponding slot plate 20 in the lower row which is arranged opposite to the corresponding slot plate 20 in the upper row can rotate by the power transmission of the connecting rod 35. When the maximal surface of the slot plate 20 is parallel to the output wind direction of the wind hole 121, the wind hole 121 is opened, as shown in FIG. 2 and FIG. 4. When the maximal surface of the slot plate 20 is vertical to the output wind direction of the wind hole 121, the wind hole 121 is closed as shown in FIG. 3 and FIG. 5.

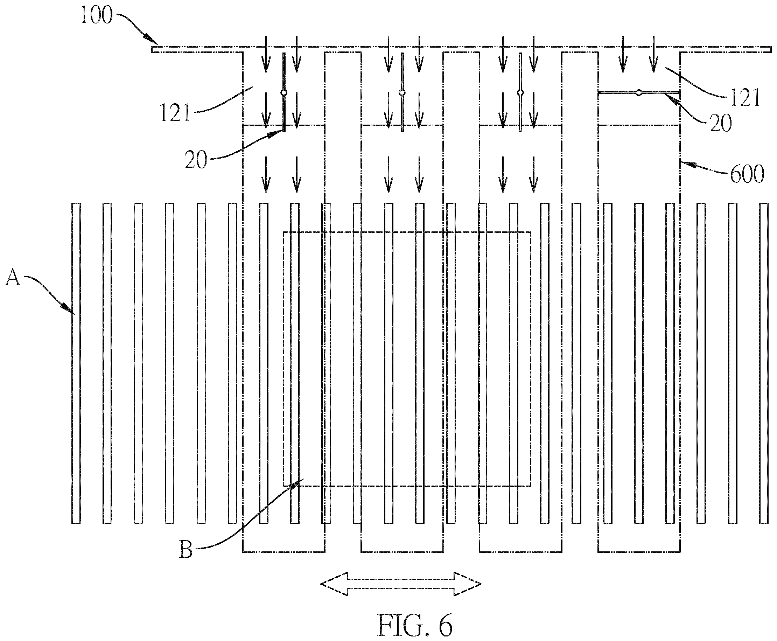

Refer to FIG. 6, and FIG. 6 is a sixth schematic diagram of an energy-saving wind box according to a first embodiment of the present disclosure. As shown in the drawings, in one embodiment, when the size of the glass B to be cooled down on the rollers A is detected by human judgment or the device automatically, the energy-saving wind box 100 of the present disclosure opens the corresponding wind holes 121 according to the dimension and the position of the glass B, and the wind holes which correspond to the non-existence region of the glass B are closed. In this way, only the wind outlet structures 600 which correspond to the position of the glass B output the wind power, so that the cooling operation can be completed with the most energy saving.

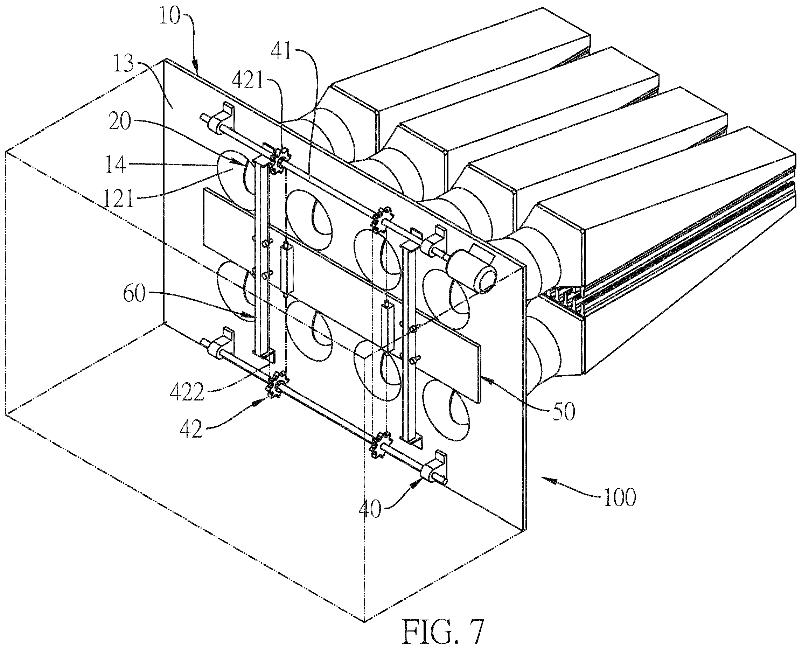

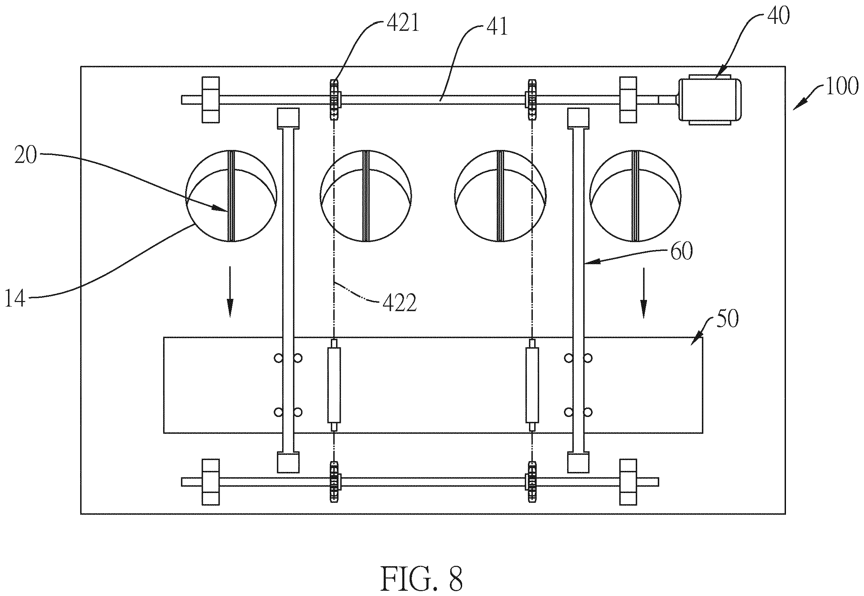

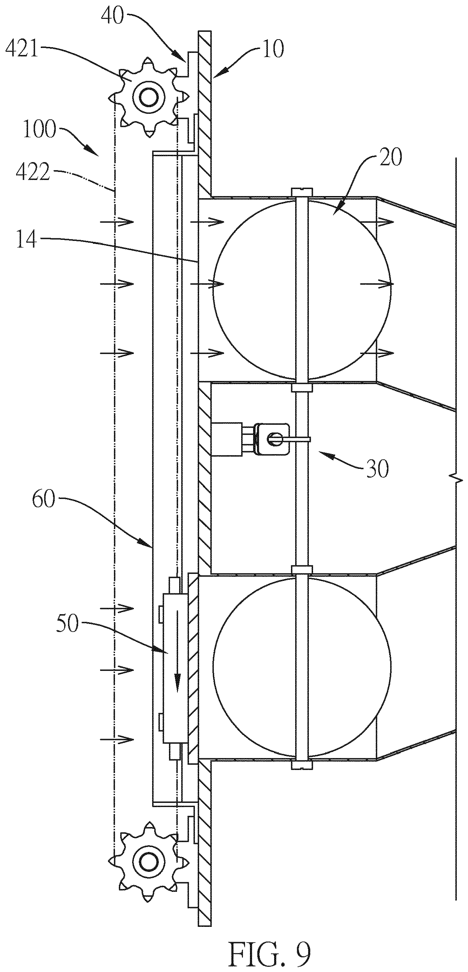

Refer to FIG. 7 through FIG. 9, and FIG. 7 through FIG. 9 are respectively a first through third schematic diagrams of an energy-saving wind box according to a second embodiment of the present disclosure. The energy-saving wind box 100 in the second embodiment has the components of the energy-saving wind box 100 in the first embodiment, and further comprises a lifting structure 40, a shield plate 50 and at least one guide frame 60. The inner surface 13 of the wind box body 10 has a plurality of through holes 14 arranged horizontally in the lower row and the upper row, the through holes 14 arranged in the lower row are arranged respectively opposite to the through holes 14 arranged in the upper row, and the through holes 14 are respectively connected to the wind holes 121. The lifting structure 40 is disposed on the inner surface 13 of the wind box body 10. The shield plate 50 is connected to the lifting structure 40. The guide frame 60 is disposed on the inner surface 13 of the wind box body 10 and connected to the shield plate 50, and the shield plate 50 is controlled by the lifting structure 40 to slide on the guide frame 60, so that the shield plate can rise or descend. The through holes 14 in the upper row or the lower row can be closed by the shield plate 50 according to the requirements, so that the wind power can only be output from the wind holes 121 in the upper row or the lower row. Further, the guide frame 60 has a position limiting function.

According to the above description, specifically, the lifting structure 40 comprises two bracket components 41 and at least one transmission component 42. The two bracket components 41 are respectively arranged on an upper part and a lower part of the inner surface 13 of the wind box body 10. The transmission component 42 has two transmission gears 421 and a transmission chain 422. The two transmission gears 421 are respectively disposed on the two bracket components 41, and the transmission chain 422 surrounds the two transmission gears 421 and is connected to the shield plate 50. When at least one of the two bracket components 41 rotates, the transmission chain 422 can be driven by the transmission gears 421, and then the longitudinal position of the shield plate 50 can be changed through the transmission chain 422.

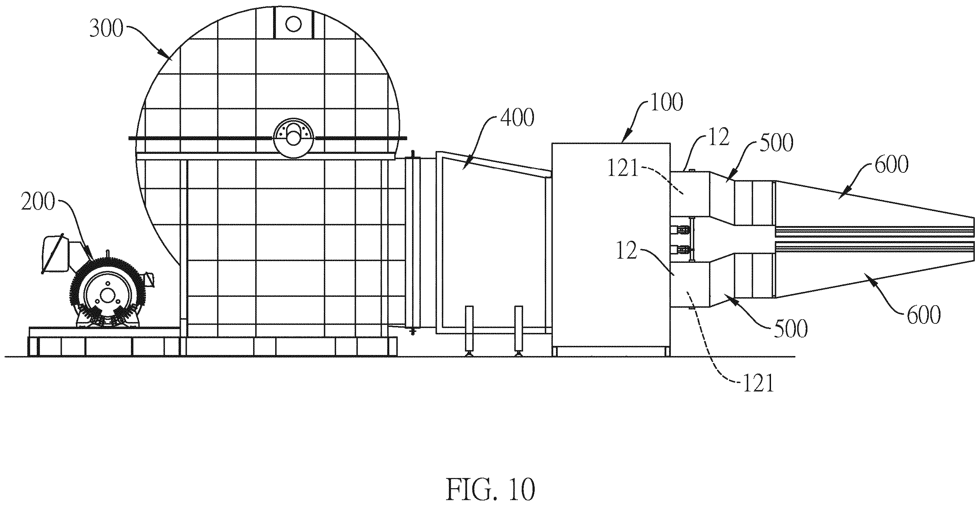

Reference is now made to FIG. 10, which is a schematic diagram of a cooling device of the present disclosure. As shown in the drawing, the cooling device at least comprises a motor 200, an air blower 300, a first wind supply pipe 400, the energy-saving wind box 100 of the first or second embodiment, second wind supply pipes 500 and wind outlet structures 600. The air blower 300 is connected to the motor 200. One end of the first wind supply pipe 400 is connected to the air blower 300. A wind inlet of the energy-saving wind box 100 is connected to another one end of the first wind supply pipe 400, and the other one end of the first wind supply pipe 400 is opposite to the end of the first wind supply pipe 400 which is connected to the air blower 300. One end of each of the second wind supply pipes 500 is connected to the corresponding air outlet 12 of the energy-saving wind box 100. Each of the wind outlet structures 600 is connected to another one end of the corresponding second wind supply pipe 500, the other one end of the corresponding second wind supply pipe 500 is opposite to the end of the corresponding second wind supply pipe 500 which is connected to the energy-saving wind box 100. The motor 200 adjusts a rotating speed according to a number of the opened wind holes 121 of the energy-saving wind box 100, so as to control the air blower 300 to generate a corresponding wind power, and then the wind power is output by the wind outlet structure 600.

Specifically, the present disclosure is mainly based on the arrangement of the slot plates in the wind holes of the outer surface of the wind box body, each slot plate is connected to the corresponding driving component, and the slot plate can be pivoted through the control of the driving component to close or open the corresponding wind hole. Furthermore, the present disclosure can also set a shield plate on the inner surface of the wind box body. The shield plate can be longitudinally displaced under the control of the lifting structure to selectively shield the through holes which are located on the inner surface and communicated with the wind holes. Therefore, the cooling device of the present disclosure can adjust the wind output region according to the size and the position of the glass and can further adjust the rotating speed of the motor according to the number of opened wind holes of the wind box body, so as to achieve energy saving and cost reduction.

## Claims

1. An energy-saving wind box for cooling a glass sheet, wherein the energy-saving wind box comprises:
a wind box body (10), wherein an outer surface (11) of the wind box body (10) has a plurality of air outlets (12), the air outlets (12) are horizontally arranged in an upper row and a lower row, the air outlets (12) in an upper row are arranged respectively opposite to the air outlets (12) in the lower row, and each of the air outlets (12) has a wind hole (121);
a plurality of slot plates (20), wherein the slot plates (20) are respectively disposed in the wind holes (121); and **characterized in that** it further comprises
a plurality of driving components (30), wherein each of the driving components (30) is connected to the corresponding slot plate (20) in the upper row and the corresponding slot plate (20) in the lower row which is arranged opposite to the corresponding slot plate (20) in the upper row, the corresponding two slot plates (20) are controlled by the driving component (30) to pivot to close or open the two corresponding wind holes (121).

2. The energy-saving wind box of claim 1, wherein the driving component (30) comprises:
a base (31), wherein the base (31) is connected to the outer surface (11) of the wind box body (10);
a cylinder (32), wherein one end of the cylinder (32) is connected to the base (31);
an adapter (33), wherein one end of the adapter (33) is connected to another one end of the cylinder (32), and the other one end of the cylinder (32) is opposite to the end of the cylinder (32) which is connected to the base (31);
a pivot (34), wherein one end of the pivot (34) is connected to the another one end of the adapter (33), and the other one end of the adapter (33) is opposite to the end of the adapter (33) which is connected to the cylinder (32); and
a connecting rod (35), wherein the connecting rod (35) is connected to another one end of the pivot (34), the other one end of the pivot (34) is opposite to the end of pivot (34) which is connected to the adapter (33), and two opposite ends of the connecting rod (35) are connected to the corresponding slot plate (20) in the upper row and the corresponding slot plate (20) in the lower row which is arranged opposite to the corresponding slot plate (20) in the upper row.

3. The energy-saving wind box of claim 1, wherein an inner surface (13) of the wind box body (10) has a plurality of through holes (14) arranged horizontally in the lower row and the upper row, the through holes (14) arranged in the lower row are arranged respectively opposite to the through holes (14) arranged in the upper row, and the through holes (14) are respectively connected to the wind holes (121); wherein energy-saving wind box (100) further comprises:
a lifting structure (40), wherein the lifting structure (40) is disposed on the inner surface (13) of the wind box body (10); and
a shield plate (50), wherein the shield plate (50) is connected to the lifting structure (40), the shield plate (50) is controlled by the lifting structure (40) to rise or descend, so as to close the through holes (14) in the upper row or the through holes (14) in the lower row.

4. The energy-saving wind box of claim 3, wherein the lifting structure (40) comprises:
two bracket components (41), wherein the two bracket components (41) are respectively arranged on an upper part and a lower part of the inner surface (13) of the wind box body (10); and
at least one transmission component (42), wherein the transmission component (42) comprises two transmission gears (421) and a transmission chain (422), the two transmission gears (421) are respectively disposed on the two bracket components (41), and the transmission chain (422) surrounds the two transmission gears (421) and is connected to the shield plate (50).

5. The energy-saving wind box of claim 4, further comprising:
a guide frame (60), wherein the guide frame (60) is disposed on the inner surface (13) of the wind box body (10) and connected to the shield plate (50),
and the shield plate (50) is controlled by the lifting structure (40) to slide on the guide frame (60).

6. A cooling device for cooling a glass sheet, which is **characterized by** that the cooling device comprises:
a motor (200);
an air blower (300), wherein the air blower (300) is connected to the motor (200);
a first wind supply pipe (400), wherein one end of the first wind supply pipe (400) is connected to the air blower (300);
the energy-saving wind box (100) of one of claims 1-5, wherein a wind inlet of the energy-saving wind box (100) is connected to another one end of the first wind supply pipe (400), and the other one end of the first wind supply pipe (400) is opposite to the end of the first wind supply pipe (400) which is connected to the air blower (300);
a plurality of second wind supply pipes (500), wherein one end of each of the second wind supply pipes (500) is connected to the corresponding air outlet (12) of the energy-saving wind box (100); and
a plurality of wind outlet structures (600), wherein each of the wind outlet structures (600) is connected to another one end of the corresponding second wind supply pipe (500), the other one end of the corresponding second wind supply pipe (500) is opposite to the end of the corresponding second wind supply pipe (500) which is connected to the energy-saving wind box (100);
wherein the motor (200) adjusts a rotating speed according to a number of the opened wind holes (121) of the energy-saving wind box (100), so as to control the air blower (300) to generate a corresponding wind power, and then the wind power is output by the wind outlet structure (600).

## Patentansprüche

1. Ein energiesparender Windkasten zur Kühlung einer Glasscheibe, wobei der energiesparende Windkasten die folgenden Komponenten umfasst:
ein Windkastengehäuse (10), wobei eine Außenfläche (11) des Windkastengehäuses (10) mehrere Luftauslassöffnungen (12) aufweist, die Luftauslassöffnungen (12) horizontal in oberer und unterer Reihe gebildet sind, die Luftauslassöffnungen (12) in einer oberen Reihe jeweils gegenüber den Luftauslassöffnungen (12) in der unteren Reihe gebildet sind, wobei jede der Luftauslassöffnungen (12) ein Windloch (121) aufweist;
mehrere Schlitzplatten (20), wobei die Schlitzplatten (20) jeweils in den Windlöchern (121) angeordnet sind; und **dadurch gekennzeichnet, dass** es weiter die folgenden Komponenten umfasst:
mehrere Antriebskomponenten (30), wobei jede der Antriebskomponente (30) an der entsprechenden Schlitzplatte (20) in der oberen Reihe und der entsprechenden Schlitzplatte (20) in der unteren Reihe, die gegenüber der entsprechenden Schlitzplatte (20) angeordnet ist, befestigt ist, in der oberen Reihe die entsprechenden zwei Schlitzplatten (20) durch die Antriebskomponente (30) zum Verschließen oder Öffnen der beiden entsprechenden Windlöcher (121) gedreht werden.

2. Der energiesparende Windkasten nach Anspruch 1, wobei die Antriebskomponente (30) die folgenden Komponenten umfasst:
eine Basis (31), wobei die Basis (31) an der Außenfläche (11) des Windkastengehäuses (10) befestigt ist;
ein Zylinder (32), wobei ein Ende des Zylinders (32) an der Basis (31) befestigt ist;
ein Adapter (33), wobei ein Ende des Adapters (33) an einem anderen Ende des Zylinders (32) befestigt ist und das andere Ende des Zylinders (32) dem Ende des Zylinders (32), der an der Basis (31) befestigt ist, gegenüberliegt;
ein Drehgelenk (34), wobei ein Ende des Drehgelenks (34) am anderen Ende des Adapters (33) befestigt ist und das andere Ende des Adapters (33) dem Ende des Adapters (33), das am Zylinder (32) befestigt ist, gegenüberliegt; und
eine Verbindungsstange (35), wobei die Verbindungsstange (35) an einem anderen Ende des Drehgelenks (34) befestigt ist, das andere Ende des Drehgelenks (34) dem Ende des Drehgelenks (34), das am Adapter (33) befestigt ist, gegenüberliegt, wobei zwei gegenüberliegende Enden der Verbindungsstange (35) in der oberen Reihe an der entsprechenden Schlitzplatte (20) und in der unteren Reihe an der entsprechenden Schlitzplatte (20), die gegenüber der entsprechenden Schlitzplatte (20) in der oberen Reihe angeordnet ist, befestigt ist.

3. Der energiesparende Windkasten nach Anspruch 1, wobei eine Innenfläche (13) des Windkastengehäuses (10) mehrere horizontal in der unteren Reihe und der oberen Reihe gebildeten Durchgangslöcher (14) aufweist, die in der unteren Reihe gebildeten Durchgangslöcher (14) jeweils gegenüber den in der oberen Reihe gebildeten Durchgangslöchern (14) gebildet sind, wobei die Durchgangslöcher (14) jeweils mit den Windlöchern (121) verbunden sind; wobei der energiesparende Windkasten (100) weiter die folgenden Komponenten umfasst:
eine Hebevorrichtung (40), wobei die Hebevorrichtung (40) auf der Innenfläche (13) des Windkastengehäuses (10) angeordnet ist; und
eine Schirmplatte (50), wobei die Schirmplatte (50) an der Hebevorrichtung (40) befestigt ist, die Schirmplatte (50) durch die Hebevorrichtung (40) so gesteuert wird, dass sie ansteigt oder absinkt, so dass die Durchgangslöcher (14) in der oberen Reihe bzw. die Durchgangslöcher (14) in der unteren Reihe verschlossen werden.

4. Der energiesparende Windkasten nach Anspruch 3, wobei die Hebevorrichtung (40)die folgenden Komponenten umfasst:
zwei Halterungskomponenten (41), wobei die beiden Halterungskomponenten (41) jeweils an einem oberen und einem unteren Teil der Innenfläche (13) des Windkastengehäuses (10) angeordnet sind; und
mindestens eine Getriebekomponente (42), wobei die Getriebekomponente (42) zwei Getrieberäder (421) und eine Getriebekette (422) umfasst, die beiden Getrieberäder (421) jeweils auf den beiden Halterungskomponenten (41) angeordnet sind und die Getriebekette (422) die beiden Getrieberäder (421) umgibt und an der Schirmplatte (50) befestigt ist.

5. Der energiesparende Windkasten nach Anspruch 4, weiter umfassend:
einen Führungsrahmen (60), wobei der Führungsrahmen (60) an der Innenfläche (13) des Windkastengehäuses (10) angeordnet und an der Schirmplatte (50) befestigt ist, wobei die Schirmplatte (50) durch die Hebevorrichtung (40) so gesteuert wird, dass sie auf dem Führungsrahmen (60) gleitet.

6. Eine Kühlvorrichtung zur Kühlung einer Glasscheibe, **dadurch gekennzeichnet, dass** die Kühlvorrichtung die folgenden Komponenten umfasst:
einen Motor (200);
ein Gebläse (300), wobei das Gebläse (300) am Motor (200) befestigt ist; eine erste Windzufuhrleitung (400), wobei ein Ende der ersten Windzufuhrleitung (400) am Gebläse (300) befestigt ist;
der energiesparende Windkasten (100) nach einem der Ansprüche 1-5, wobei ein Windeinlass des energiesparenden Windkastens (100) an einem anderen Ende der ersten Windzufuhrleitung (400) befestigt ist und das andere Ende der ersten Windzufuhrleitung (400) dem Ende der ersten Windzufuhrleitung (400) gegenüberliegt, das am Gebläse (300) befestigt ist;
mehrere zweite Windzufuhrleitungen (500), wobei ein Ende jede der zweiten Windzufuhrleitungen (500) an der entsprechenden Luftauslassöffnung (12) des energiesparenden Windkastengehäuses (100) befestigt ist; und
mehreren Windauslassstrukturen (600), wobei jede der Windauslassstrukturen (600) an einem anderen Ende der entsprechenden zweiten Windzufuhrleitung (500) befestigt ist, das andere Ende des entsprechenden zweiten Windzufuhrleitung (500) dem Ende des entsprechenden zweiten Windzufuhrleitung (500), welches am energiesparenden Windkasten (100) befestigt ist, gegenüberliegt;
wobei der Motor (200) eine Drehzahl entsprechend einer Anzahl der geöffneten Windlöcher (121) des energiesparenden Windkastens (100) anpasst, um das Gebläse (300) so zu steuern, dass es eine entsprechende Windenergie erzeugt und die Windenergie dann von der Windauslassstruktur (600) abgeführt wird.

## Revendications

1. Un caisson de ventilation économe en énergie pour le refroidissement de feuille de verre, dans lequel le caisson de ventilation économe en énergie comprend :
un corps de caisson de ventilation (10), dont une surface extérieure (11) comporte une pluralité de sorties d'air (12), ces sorties d'air (12) sont disposées horizontalement en une rangée supérieure et une rangée inférieure, les sorties d'air (12) de la rangée supérieure étant respectivement alignées en face des sorties d'air (12) de la rangée inférieure, et chaque sortie d'air (12) est dotée d'un trou d'air (121) ;
une pluralité de plaques à fentes (20), où ces plaques à fentes (20) sont respectivement installées dans les trous d'air (121) ;
et sont également **caractérisées en ce qu'**elles comprennent : une pluralité d'éléments de transmission (30), où chaque élément de transmission (30) est connecté à la plaque à fentes correspondante (20) située dans la rangée supérieure ainsi qu'à la plaque à fentes correspondante (20) située dans la rangée inférieure, laquelle est alignée en face de la plaque à fentes (20) de la rangée supérieure, les deux plaques à fentes correspondantes (20) sont contrôlées par l'élément de transmission (30) pour pivoter, de manière à ouvrir ou fermer les deux trous d'air correspondants (121).

2. Le caisson de ventilation économe en énergie selon la revendication 1, dans lequel l'élément de transmission (30) comprend :
une base (31), où la base (31) est connectée à la surface extérieure (11) du corps de caisson de ventilation (10) ;
un cylindre (32), où une extrémité du cylindre (32) est connectée à la base (31) ;
un adaptateur (33), où une extrémité de l'adaptateur (33) est connectée à l'autre extrémité du cylindre (32), et l'autre extrémité du cylindre (32) est opposée à l'extrémité du cylindre (32) qui est connectée à la base (31) ;
un pivot (34), où une extrémité du pivot (34) est connectée à l'autre extrémité de l'adaptateur (33), et l'autre extrémité de l'adaptateur (33) est opposée à l'extrémité de l'adaptateur (33) qui est connectée au cylindre (32) ;
une bielle (35), où la bielle (35) est connectée à l'autre extrémité du pivot (34), l'autre extrémité du pivot (34) étant opposée à l'extrémité du pivot (34) qui est connectée à l'adaptateur (33). Les deux extrémités opposées de la bielle (35) sont connectées à la plaque à fentes correspondante (20) de la rangée supérieure et à la plaque à fentes correspondante (20) de la rangée inférieure, laquelle est alignée en face de la plaque à fentes correspondante (20) de la rangée supérieure.

3. Le caisson de ventilation économe en énergie selon la revendication 1, dans lequel une surface intérieure (13) du corps de caisson de ventilation (10) comporte une pluralité de trous traversants (14) disposés horizontalement en une rangée inférieure et une rangée supérieure, les trous traversants (14) de la rangée inférieure étant respectivement alignés en face des trous traversants (14) de la rangée supérieure, et les trous traversants (14) étant respectivement connectés aux trous d'air (121),
ce caisson de ventilation économe en énergie (100) comprend également :
une structure de levage (40), où la structure de levage (40) est disposée sur la surface intérieure (13) du corps de caisson de ventilation (10) ; et
une plaque écran (50), où la plaque écran (50) est connectée à la structure de levage (40), la plaque écran (50) est contrôlée par la structure de levage (40) pour monter ou descendre, de manière à fermer les trous traversants (14) de la rangée supérieure ou les trous traversants (14) de la rangée inférieure.

4. Le caisson de ventilation économe en énergie selon la revendication 3, dans lequel la structure de levage (40) comprend :
deux éléments de support (41), où les deux éléments de support (41) sont respectivement disposés sur une partie supérieure et une partie inférieure de la surface intérieure (13) du corps de caisson de ventilation (10) ; et
au moins un élément de transmission (42), où l'élément de transmission (42) comprend deux engrenages de transmission (421) et une chaîne de transmission (422)., les deux engrenages de transmission (421) sont respectivement disposés sur les deux éléments de support (41), et la chaîne de transmission (422) entoure les deux engrenages de transmission (421) et est connectée à la plaque écran (50).

5. Le caisson de ventilation économe en énergie selon la revendication 4, comprenant en outre :
un cadre de guidage (60), où le cadre de guidage (60) est disposé sur la surface intérieure (13) du corps de caisson de ventilation (10) et connecté à la plaque écran (50) et la plaque écran (50) est contrôlée par la structure de levage (40) pour coulisser sur le cadre de guidage (60).

6. Un dispositif de refroidissement pour le refroidissement de feuille de verre, **caractérisé en ce que** le dispositif de refroidissement comprend :
un moteur (200) ;
un souffleur d'air (300), où le souffleur d'air (300) est connecté au moteur (200) ;
un premier tuyau d'alimentation en air (400), où une extrémité du premier tuyau d'alimentation en air (400) est connectée au souffleur d'air (300) ;
le caisson de ventilation économe en énergie (100) selon l'une des revendications 1 à 5, où une entrée d'air du caisson de ventilation économe en énergie (100) est connectée à l'autre extrémité du premier tuyau d'alimentation en air (400), et l'autre extrémité du premier tuyau d'alimentation en air (400) est opposée à l'extrémité connectée au souffleur d'air (300) ;
une pluralité de seconds tuyaux d'alimentation en air (500), où une extrémité de chacun des seconds tuyaux d'alimentation en air (500) est connectée à la sortie d'air correspondante (12) du caisson de ventilation économe en énergie (100) ; et
une pluralité de structures de sortie d'air (600), où chacune des structures de sortie d'air (600) est connectée à l'autre extrémité du tuyau d'alimentation en air correspondant (500), l'autre extrémité du tuyau d'alimentation en air correspondant (500) étant opposée à l'extrémité connectée au caisson de ventilation économe en énergie (100) ;
dans ce dispositif, le moteur (200) ajuste sa vitesse de rotation en fonction du nombre de trous d'air ouverts (121) dans le caisson de ventilation économe en énergie (100), afin de contrôler le souffleur d'air (300) pour générer une puissance de ventilation correspondante, laquelle puissance de ventilation est ensuite diffusée par la structure de sortie d'air (600).
